(19) **Europäisches Patentamt European Patent Office Office européen des brevets**

(11) **EP 2 426 008 B1**

(12) **FASCICULE DE BREVET EUROPEEN**

(45) Date de publication et mention de la délivrance du brevet:
**30.09.2015 Bulletin 2015/40**

(51) Int Cl.:
**B60L 3/04** *(2006.01)*     **B60L 7/14** *(2006.01)*
**B60L 11/18** *(2006.01)*     **B60L 15/20** *(2006.01)*

(21) Numéro de dépôt: **11306004.0**

(22) Date de dépôt: **02.08.2011**

(54) **Procédé de commande d'un moteur électrique d'entraînement d'un véhicule automobile**

Verfahren zur Steuerung eines elektrischen Antriebsmotors eines Kraftfahrzeugs

Method for controlling an electric motor driving an automobile

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.09.2010 FR 1057038**

(43) Date de publication de la demande:
**07.03.2012 Bulletin 2012/10**

(73) Titulaire: **Renault S.A.S.**
**92100 Boulogne-Billancourt (FR)**

(72) Inventeurs:
• **Marsilia, Marco**
**92100 BOULOGNE BILLANCOURT (FR)**
• **Cregut, Samuel**
**78470 SAINT REMY LES CHEVREUSE (FR)**

(56) Documents cités:
**EP-A1- 1 084 895**     **EP-A1- 2 110 280**
**JP-A- 9 154 202**     **JP-A- 2001 095 106**
**JP-A- 2005 218 250**     **US-A1- 2008 197 796**

EP 2 426 008 B1

**Description**

La présente invention concerne le contrôle d'une machine électrique comprenant un moteur électrique d'entraînement d'un véhicule automobile, notamment un véhicule électrique ou un véhicule hybride, ce moteur électrique étant alimenté grâce à une batterie. Elle concerne en particulier un procédé de commande d'alimentation d'une telle machine et un dispositif d'alimentation d'une telle machine. Elle concerne aussi un programme informatique de mise en oeuvre du procédé de commande. Elle concerne également un système d'entraînement d'un véhicule comprenant un tel dispositif de commande et un véhicule automobile comprenant un tel système d'entraînement.

Dans les véhicules automobiles électriques ou hybrides, on utilise un moteur électrique pour fournir la puissance mécanique nécessaire au mouvement du véhicule. Pour ce faire, une puissance électrique est fournie au moteur par une batterie. L'utilisation de ces moyens de mise en mouvement du véhicule présente des problèmes. En effet, lorsque la batterie est déchargée, elle ne peut plus fournir la pleine puissance et, par conséquent, la machine électrique ne peut plus fournir le maximum de couple moteur. A l'inverse, lorsque la batterie est complètement chargée, la capacité de freinage du véhicule grâce au moteur électrique est diminuée. En effet, le fonctionnement du moteur électrique en mode générateur induit une augmentation de la tension dans la batterie, cette tension ne devant pas être trop élevée. Ainsi, afin de ne pas détruire ou détériorer la batterie, si la tension aux bornes d'une des cellules de la batterie devient trop élevée, une limitation du couple de freinage ou couple récupératif délivré par le moteur électrique permet de réduire la tension et de la ramener à une valeur acceptable.

On connaît de la demande WO 2008/093687 un procédé de limitation des pertes énergétiques dans la machine électrique afin de maximiser l'autonomie de roulage. Ce procédé est basé sur des cartographies qui donnent des valeurs de pertes en fonction du couple et de la vitesse de rotation de la machine électrique. Ainsi, les points de fonctionnement de la machine électrique sont cantonnés dans un domaine de bon rendement de celle-ci.

On connaît de la demande EP1084895 un procédé de contrôle du couple moteur d'un véhicule électrique à partir de différentes informations dont notamment la température du moteur ou le niveau de charge de la batterie alimentant le moteur.

Les documents JP2001095106, JP9154202, JP2005218250 et US2008197796 divulguent un procédé de contrôle de moteur électrique, dans lequel le couple de consigne du moteur est limité de manière à empêcher la tension de la batterie de traction de dépasser un seuil prédéterminé de surcharge.

Le but de l'invention est de fournir un procédé de commande d'alimentation ou de commande de fonctionnement d'une machine électrique permettant de remédier aux problèmes évoqués précédemment et améliorant les procédés de commande d'alimentation ou de commande de fonctionnement d'une machine électrique connus de l'art antérieur. En particulier, l'invention propose un procédé de commande d'une machine électrique permettant une limitation optimisée du couple récupératif lorsque la batterie est chargée.

Selon l'invention, le procédé de commande d'une machine électrique comprend un moteur électrique d'entraînement d'un véhicule automobile alimenté par une batterie comprenant des cellules (31, 32, 311). Il comprend une étape de limitation du couple récupératif pouvant être fourni par le moteur électrique.

L'étape de limitation du couple récupératif peut être activée dès que la tension électrique aux bornes d'au moins une cellule de la batterie est supérieure à un premier seuil.

L'étape de limitation du couple récupératif peut être désactivée dès que les tensions électriques aux bornes des cellules de la batterie sont toutes inférieures à un deuxième seuil.

L'étape de limitation peut être basée sur une régulation en boucle fermée.

Dans la régulation en boucle fermée, la consigne peut être un seuil de tension des cellules de la batterie et la commande peut être le couple mécanique ou la puissance mécanique fourni par la machine électrique.

La régulation peut être de type discrète.

La régulation peut utiliser un régulateur de type proportionnel intégral.

L'invention porte aussi sur unsupport d'enregistrement de données lisible par un calculateur sur lequel est enregistré un programme informatique comprenant des moyens de codes de programme informatique de mise en oeuvre des étapes du procédé de commande défini précédemment.

Selon l'invention, le dispositif de commande d'une machine électrique comprenant un moteur électrique d'entraînement d'un véhicule automobile alimenté par une batterie comprend des moyens matériels et/ou logiciels de mise en oeuvre du procédé de commande défini précédemment

Les moyens matériels peuvent comprendre un régulateur de type proportionnel intégral.

Selon l'invention, le système d'entraînement d'un véhicule automobile comprend un dispositif de commande défini précédemment, une machine électrique comprenant un moteur électrique d'entraînement du véhicule automobile et une batterie.

Selon l'invention, le programme informatique comprend un moyen de code de programme informatique adapté à la réalisation des étapes du procédé défini précédemment, lorsque le programme tourne sur un ordinateur.

Les dessins annexés représentent, à titre d'exemple, un mode de réalisation d'un procédé de commande selon l'invention.

La figure 1 est un schéma d'une machine électrique alimentée par une batterie et commandée conformément au procédé selon l'invention.

La figure 2 est un schéma d'un mode de réalisation d'un dispositif de commande selon l'invention.

La figure 3 est un schéma d'un mode de réalisation d'un premier module du dispositif de commande.

La figure 4 est un graphique représentant l'évolution du couple maximal que peut délivrer la machine électrique en mode générateur, en fonction de sa vitesse de rotation.

La figure 5 est un schéma d'un mode de réalisation d'un premier bloc du premier module du dispositif de commande.

La figure 6 est un schéma représentant le principe de mesure des tensions des différentes cellules d'une batterie électrique.

La figure 7 est un schéma d'un mode de réalisation d'un deuxième bloc du premier module du dispositif de commande.

La figure 8 est un graphique représentant les évolutions temporelles de différents signaux relatifs au deuxième bloc précédemment mentionné.

La figure 9 est un schéma d'un mode de réalisation d'un troisième bloc du premier module du dispositif de commande.

La figure 10 est un schéma simplifié de la boucle de régulation réalisée dans le mode de réalisation du dispositif de commande selon invention.

La figure 11 est un diagramme de Bode de la boucle ouverte corrigée.

La figure 12 est un diagramme réponse à un échelon unitaire de la consigne.

La figure 13 est un diagramme des évolutions des tensions électriques de la batterie et des couples de la machine électrique en fonction du temps.

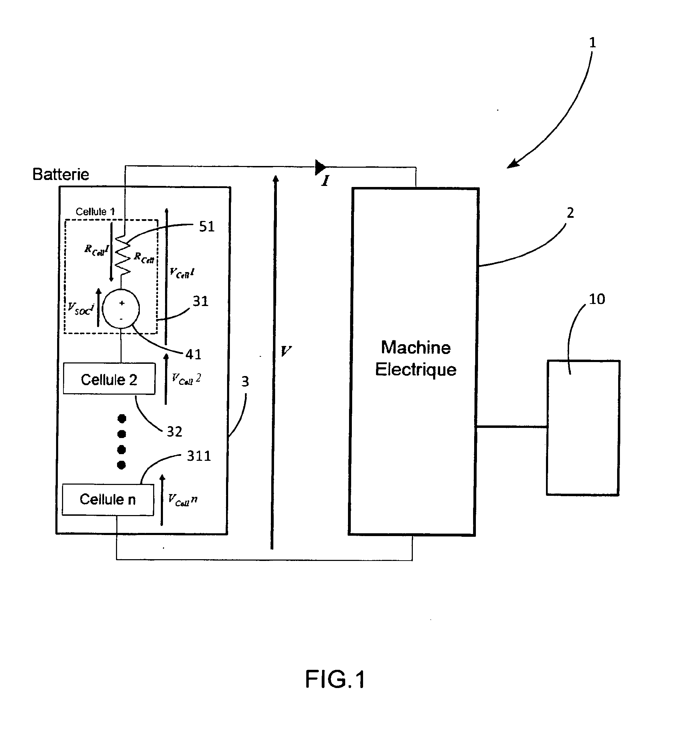

Un système 1 d'entraînement d'un véhicule automobile par exemple électrique ou hybride est représenté à la figure 1. Il comprend une batterie 3 de stockage d'énergie électrique et une machine électrique 2 comprenant un moteur électrique d'entraînement de roues motrices du véhicule.

La batterie comprend n cellules 31, 32, 3n. Chaque cellule est modélisée par un montage série d'un générateur 41, 42, 4n de tension continue parfait et d'une résistance interne 51, 52, 5n. Les différentes cellules sont représentées connectées en série. Selon les conditions de fonctionnement du système, la valeur de tension du générateur parfait et la valeur de la résistance interne varient.

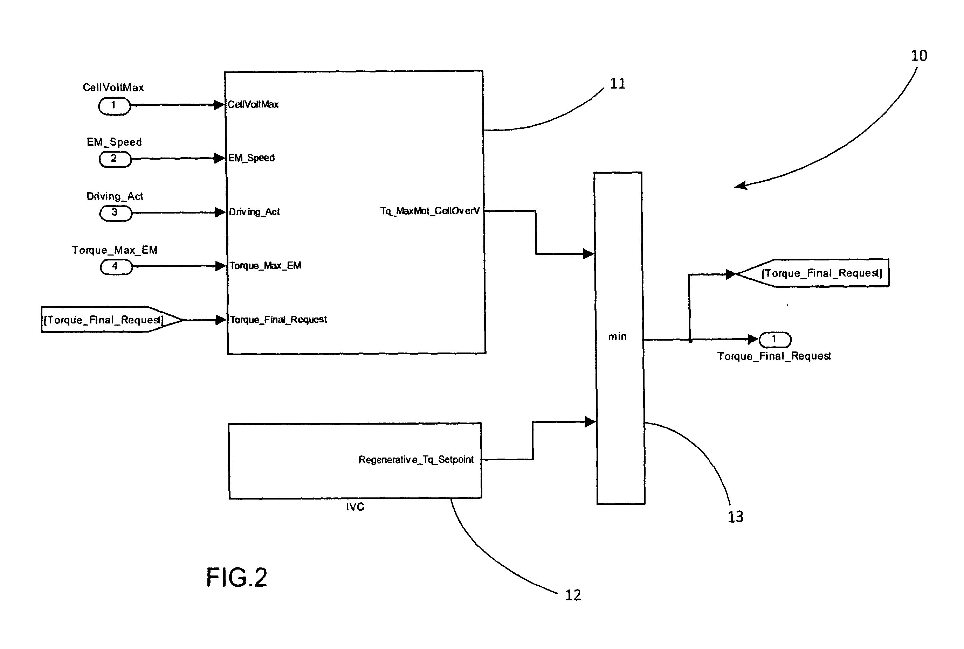

Un mode de réalisation d'un dispositif 10 de commande de la machine électrique permettant de mettre en oeuvre le procédé de commande selon l'invention est décrit ci-après en référence à la figure 2. Un tel dispositif de commande présente notamment les moyens matériels et/ou logiciels permettant de régir le procédé de commande selon l'invention. Notamment, des moyens matériels et/ou logiciels décrits en référence aux figures 2, 3, 5, 7 et 9 peuvent comprendre des programmes d'ordinateur.

Dans le mode de réalisation représenté, le dispositif de commande 10 comprend trois modules. Un premier module 11 de détermination d'un signal Tq_MaxMol_CellOverV de limitation du couple fourni par la machine électrique, un deuxième module 12 interprétant la volonté du conducteur et générant un signal Regenerative_Tq_Setpoint qui représente la consigne de couple que la machine électrique doit réaliser avant limitation par le signal Tq_MaxMol_CellOverV et un troisième module 13 fournissant en sortie un signal de couple Torque_Final_Request finalement demandé à la machine électrique.

Comme représenté à la figure 2, le premier module permet de générer le signal Tq_MaxMot-CellOverV à partir de cinq signaux d'entrée.

Les différents signaux d'entrée sont :

- le signal CellVoltMax correspond au maximum des tensions électriques de l'ensemble des cellules constituant la

batterie *CellVoltMax* = $$CellVoltMax = \underset{i=1,\dots,n}{Max}\left\{V_{Cell}i\right\};$$ avec n égal au nombre de cellules de la batterie.

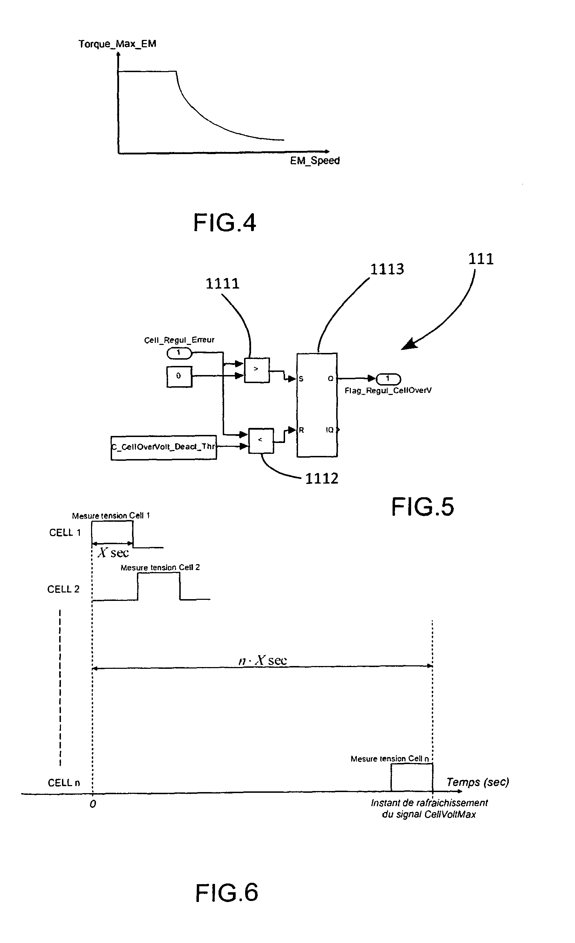

- Le signal EM_Speed correspond à la vitesse de rotation de la machine électrique;
- le signal logique Driving_Act prend un état haut quand le véhicule fonctionne en mode « roulage » (la machine électrique délivrant ou étant prête à délivrer un couple) et prend un état bas dans le cas contraire;
- le signal Torque_Max_EM correspondant au couple moteur maximum que la machine électrique peut fournir en mode générateur. Ce couple est notamment fonction de la vitesse de rotation de la machine électrique par exemple selon une courbe du type représenté à la figure 4;
- Le signal Torque_Final_Request correspond à la requête finale de couple envoyée au moteur électrique. Comme le montre la figure 2, ce signal est le minimum entre une requête de couple Regenerative_Tq-Setpoin issue d'un deuxième module 12 d'interprétation de la volonté conducteur et le signal de couple récupératif maximum Tq_MaxMot_CellOverV issu du premier module. Ce minimum est fourni par un troisième module 13. Par exemple, le deuxième module génère le signal de requête de couple en fonction de la position d'un organe de commande d'accélérateur, comme une pédale, et d'autres paramètres. Il y a donc bouclage en entrée du signal Torque_Final_Request obtenu en sortie du dispositif de commande. Dans tout ce document, on adopte la convention suivante: les signaux Torque_Final_Request et Regenerative_Tq_Setpoint sont positifs, lorsque la machine électrique fonctionne en générateur, c'est-à-dire lorsque la machine électrique produit un couple récupératif.

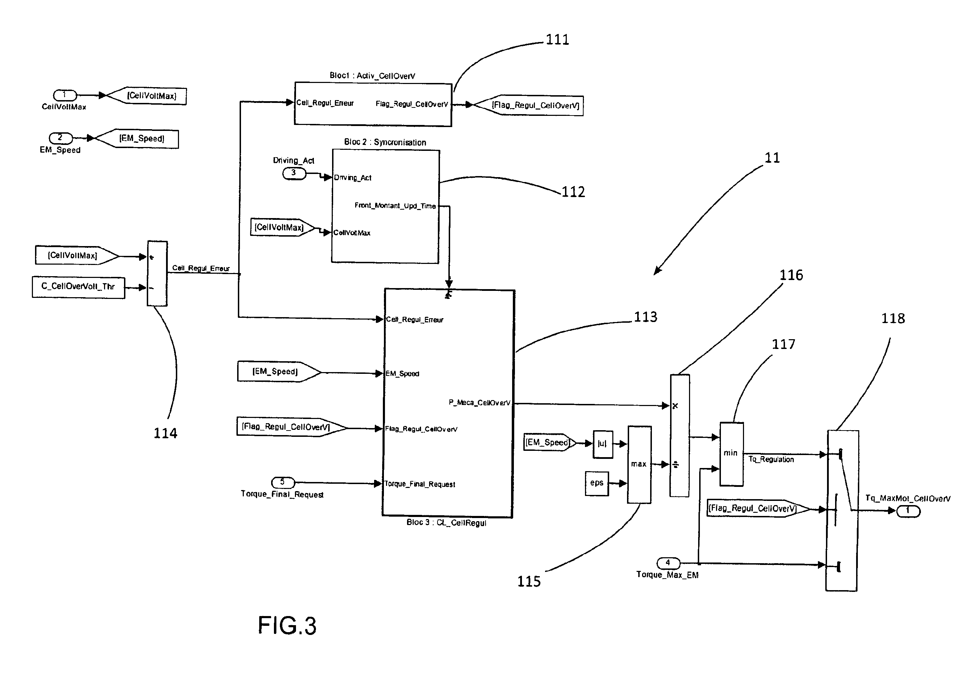

Comme représenté à la figure 3, le premier module comprend différents éléments dont trois blocs principaux 111, 112 et 113.

Le premier bloc 111 gère l'activation et désactivation d'une régulation en boucle fermée du couple mécanique fourni par la machine électrique visant à asservir la tension électrique des cellules, notamment la tension électrique maximale aux bornes des cellules de la batterie.

Un exemple de réalisation possible de ce premier bloc est décrit ci-après en référence à la figure 5. Selon cette réalisation, l'activation de la régulation en boucle fermée dépend uniquement de la valeur de la différence entre la mesure de la tension maximale aux bornes des cellules de l'ensemble des cellules de la batterie CellVoltMax et la consigne de la régulation consistant en le signal C_CellOverVolt_Thr.

Le seul signal d'entrée de ce bloc est le signal Cell_Regul_Erreur (t):

$$Cell\_Regul\_Erreur(t) = \left[CellVoltMax(t) - C\_CellOverVolt\_Thr\right]$$

Ce signal représente la différence entre la tension maximale des cellules CellVoltMax et la consigne de régulation C_CellOverVolt_Thr. Ce signal est obtenu grâce à une porte de soustraction 114.

Le bloc produit en sortie le signal logique Flag_Regul_CellOverV. Lorsque celui-ci est à l'état haut, la régulation en boucle fermée est active et, lorsque celui-ci est à l'état bas, la régulation en boucle fermée n'est pas active.

Le signal logique Flag_Regul_CellOverV est obtenu selon la logique suivante décrite en référence à la figure 5 :

Flag_Regul_CellOverV(t)= 1 SI
[Flag_Regul_CellOverV (t-1)= 0 ET Cell_Regul_Erreur (t) > 0]
Flag_Regul_CellOverV(t)= 0 SI
[Flag_Regul_CellOverV(t-1)= 1 ET Cell_Regul_Erreur (t) < C_CellOverVolt_Deact_Thr $\leq$0]

SINON Flag_Regul_CellOverV(t)= Flag_Regul_CellOveOverV (t-1) C_CellOverVolt_Deact_Thr est un paramètre de réglage négatif ou nul, Si l'on choisit une valeur strictement négative pour le paramètre C_CellOverVolt_Deact_Thr alors le premier bloc réalise ce qu'on appelle communément une hystérésis.

Cette logique peut être mise en oeuvre dans le premier bloc grâce à deux comparateurs 1111 et 1112 et une bascule, par exemple une bascule Set/Reset 1113.

Ainsi, la régulation en boucle fermée s'active (le signal logique Flag_Regul_CellOverV passe de l'état bas à l'état haut) quand la tension CellVoltMax dépasse la valeur seuil C_CellOverVolt_Thr (cela implique que le signal Cell_Regul_Erreur devient positif).

Ensuite, la régulation en boucle fermée se désactive quand le signal Cell_Regul_Erreur redevient négatif (c'est-à-dire CellVoltMax < C_CellOverVolt_Thr) et inférieur à la valeur C_CellOverVolt_Deact_Thr,

Il est logique que la consigne de régulation C_CellOverVolt_Thr soit ègale à la valeur maximale acceptable de la tension CellVoltMax. En effet, comme évoqué précédemment, on veut assurer que la tension CellVoltMax ne reste pas supérieure au seuil C_CellOverVolt_Thr pendant un temps trop long. Quand la tension CellVoltMax dépasse la valeur C_CellOverVolt_Thr, la régulation en boucle fermée va faire en sorte que, après une phase transitoire, cette tension CellVoltMax diminue jusqu'à la valeur C_CellOverVolt_Thr.

Les conditions d'activation et désactivation présentées ici ne sont pas les seules possibles. Une éventuelle réalisation du bloc 1 différente de celle décrite serait possible et sans incidence sur la structure interne des autres blocs.

Le deuxième bloc 112 génère en sortie un signal Front_Montant_Upd_Time qui permet de synchroniser le régulateur (réalisé par le troisième bloc 113) avec le signal CellVoltMax,

Le deuxième bloc utilise pour ce faire deux signaux d'entrée Driving_Act et CellVoltMax. En effet, ce dernier signal est rafraîchi avec une fréquence inférieure ou égale à celle à laquelle tourne le procédé de commande selon l'invention. Cela est dû au fait que le calculateur de la batterie doit, comme représenté à la figure 6, mesurer de façon séquentielle la tension de chaque cellule avant de pouvoir fournir la valeur maximale CellVoltMax. On comprend donc que la fréquence de rafraîchissement du signal CellVoltMax sera inversement proportionnelle au nombre de cellules de la batterie et sera, en principe, inférieure à celle du programme d'ordinateur mettant en oeuvre le procédé de commande selon l'invention. Ainsi, si la batterie comprend n cellules et que !a durée de mesure de la tension électrique d'une cellule est de X secondes, le signal CellVoltMax est au mieux rafraîchi toutes les n×X secondes.

Il est nécessaire que le régulateur de la régulation en boucle fermée soit synchronisé avec le signal CellVoltMax. Le signal Front_Montant_Upd_Time permet cette synchronisation,

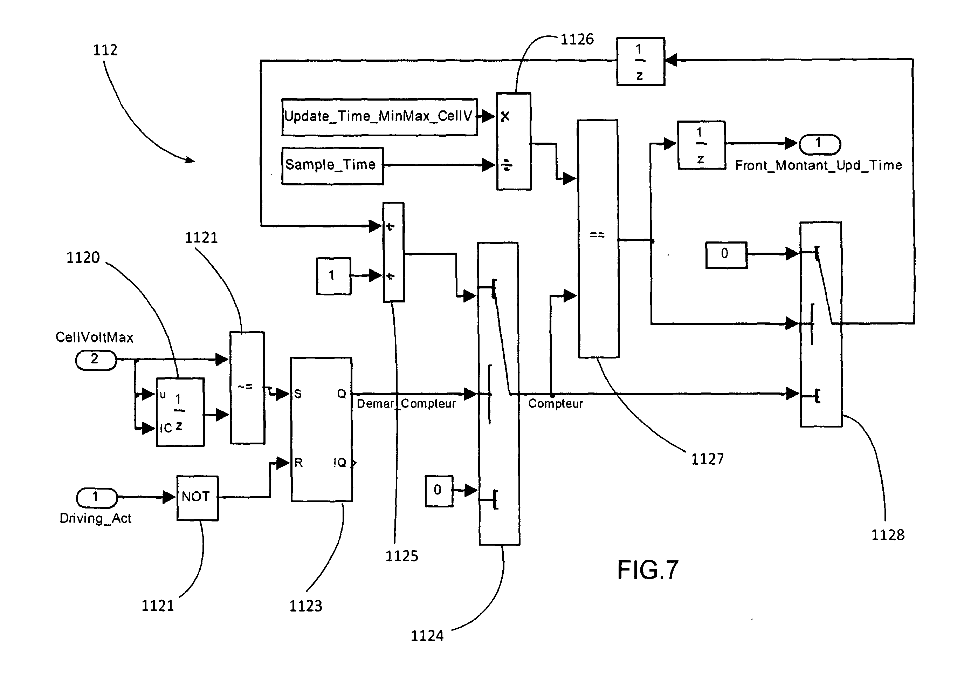

La figure 7 présente une réalisation possible de ce deuxième bloc. Le signal de sortie Front_Montant_Upd_Time est construit selon la logique suivante :

$$\begin{cases} Front\_Montant\_Upd\_Time(t) = 1 \quad SI \quad Compteur(t-1) = \dfrac{Update\_Time\_MinMax\_CellV}{Sample\_Time} \\ Front\_Montant\_Upd\_Time(t) = 0 \quad SINON \end{cases}$$

Dans les équations précédentes, on a appelé :

- Sample_Time : la période d'échantillonnage du procède de commande ;
- Update_Time_MinMax_CellV :

  ● La période de rafraîchissement du signal CellVoltMax SI cette dernière est un multiple entier de Sample_Time
  ● Le premier multiple entier de Sample_Time supérieur à la période de rafraîchissement de CellVoltMax SINON

Par exemple si :

Sample_Time=0.1 sec, et
la période de rafraîchissement du signal CellVoltMax est égale à 0.620 sec, alors Update_Time_MinMax_CellV=0.7 sec.

Le signal Compteur évoqué ci-dessus est construit comme décrit ci-dessous en référence à la figure 7.

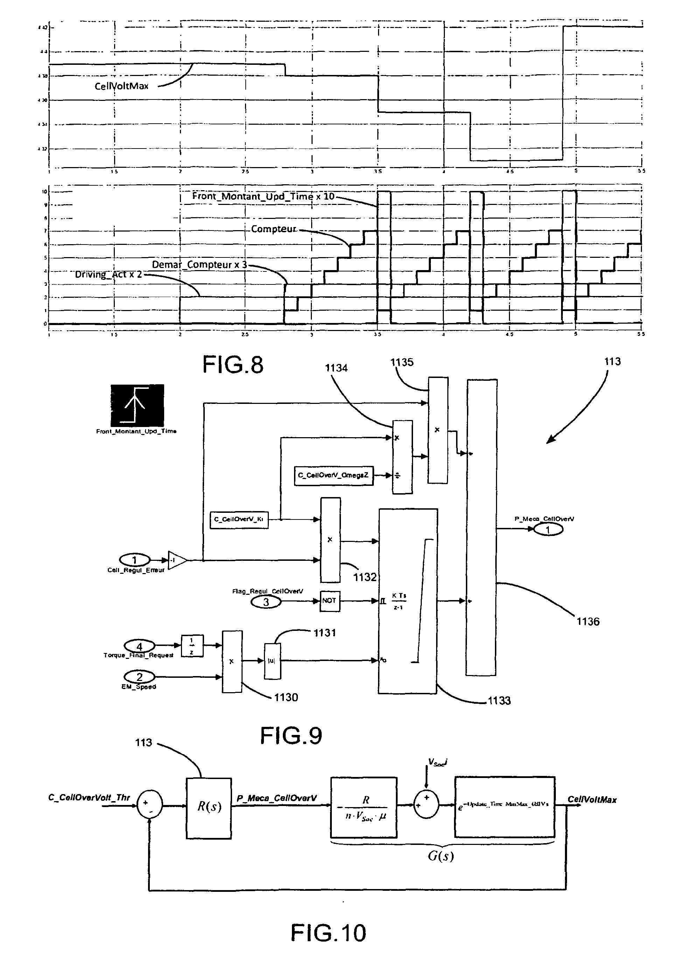

Il réalise un compteur qui est incrémenté à chaque pas (c'est-à-dire toutes les Sample_Time) et qui est remis à la valeur « 1 » après avoir atteint la valeur $\left( \dfrac{Update\_Time\_MinMax\_CellV}{Sample\_Time} \right)$ comme représenté à la figure 8. Le compteur comprend une porte d'incrémentation 1125, une porte logique 1124 de remise à zéro lors de l'arrêt de la phase de roulage et une porte logique 1128 de remise à la valeur « 1 » lorsque le compteur atteint la va-leur $\left( \dfrac{Update\_Time\_MinMax\_CellV}{Sample\_Time} \right)$.

Un comparateur 1127 permet de générer le signal Front_Montant_Upd_Time lorsque les valeurs du compteur et de sortie de la porte 1126 sont égales.

Le compteur démarre quand un signal logique Demar_Compteur passe à la valeur « 1 ». Ce dernier signal est construit de la façon montrée sur la figure 7, Il est obtenu en sortie d'une bascule Set/Reset 1123. L'entrée « Set » de cette bascule est attaquée par le signal logique [CellVoltMax(t) ≠ CellVoltMax(t-1)] obtenu en sortie d'un comparateur 1122. L'entrée « Reset » de cette bascule est le signal logique *[NOT(Driving_Act)]*.

La figure 8 montre l'évolution temporelle des différents signaux cités ci-dessus si Sample_Time=0,1 et Update_Time_MinMax_CellV=0,7. On remarque que les fronts montants du signal Front_Montant_Upd_Time sont synchronisés avec les instants de rafraîchissement du signal CellVoltMax et les fronts descendants du compteur.

Le troisième bloc 113 réalise la régulation en boucle fermée du couple récupératif dont le but est de réduire la tension CellVoltMax (la mesure) lorsque celle-ci devient supérieure à la valeur C_CellOverVolt_Thr (la consigne). En effet, une réduction du couple récupératif implique une réduction du courant absorbé par la batterie et donc une réduction de la tension de toutes les cellules de la batterie. Plus précisément, la tension CellVoltMax est asservie en boucle fermée à la consigne C_CellOverVolt_Thr. La requête de couple récupératif est la variable de commande de cette régulation.

Un exemple de réalisation de ce troisième bloc est décrit ci-après en référence à la figure 9. Les signaux en entrée de ce bloc sont les signaux :

- EM_Speed ;
- Torque_Final_Request ;
- Flag_Regul_CellOverV : signal logique issu du premier bloc;
- signal d'erreur ou de différence entre la tension maximale des cellules CellVoltMax et la consigne de régulation C_CellOverVolt_Thr :

$$Cell\_Regul\_Erreur(t) = \left[CellVoltMax(t) - C\_CellOverVolt\_Thr\right]$$

- Front_Montant_Upd_Time : signal logique issu du deuxième bloc;

Le troisième bloc est déclenché sur les fronts montants du signal Front_Montant_Upd_Time, c'est-à-dire qu'il effectue un calcul à chaque front montant du signal Front_Montant_Upd_Time. Comme on l'a vu précédemment, les fronts montants du signal Front_Montant_Upd_Time sont synchronisés avec les instants de rafraîchissement du signal CellVoltMax ; les opérations du troisième bloc sont donc synchronisées avec ce dernier signal.

Le troisième bloc produit en sortie le signal P_Meca_CellOverV qui donne la puissance mécanique issue de la régulation en boucle fermée. Ce signal est obtenu selon la logique suivante :

$$Pour\ t \geq t0$$

$$P\_Meca\_CellOverV(t) = -C\_CellOverV\_Ki \cdot \left[\frac{Cell\_Regul\_Erreur(t)}{C\_CellOverV\_OmegaZ} + \int_{t0} Cell\_Regul\_Erreur(t)\partial t\right] + P\_Meca0$$

Avec :

- t0 : instant de début de la régulation (instant où le signal Flag_Regul_CellOverV passe à l'état haut) :
- P_Meca0 : valeur de P_Meca_CellOverV à l'instant t0 (car *Cell_Regul_Erreur*(t0) =0) ;
- C_CellOverV_Ki : paramètre de réglage positif. Il représente le gain intégral ainsi que le gain statique du régulateur en boucle fermée réalisé par le troisième bloc. Comme on le verra plus loin, ce paramètre permet de régler la dynamique de la régulation.
- C_CellOverV_Omega_Z : paramètre de réglage positif. Il représente la fréquence du zéro du régulateur exprimée en rad/s. Comme on le verra plus loin, la valeur de ce paramètre doit être choisie uniquement en fonction de la valeur de Update_Time_MinMax_CellV.

Le signal P_Meca_CellOverV issu d'une porte 1136 n'est utilisé pour construire la sortie de l'invention que quand la régulation en boucle fermée est active (Flag_Regul_CellOverV=1) et donc que pour t≥t0

Dans le troisième bloc représenté à la figure 9, le terme intégral (présent dans l'équation 1) est calculé uniquement quand le signal Flag_Regul_CellOverV=1 grâce à un intégrateur 1133. Quand Flag_Regul_CellOverV=0, la sortie de l'intégrateur est forcée à la valeur |*EM_Speed*(t).*Torque_Final_Request*(t -1)| issue de la porte de multiplication 1130 et de la porte 1131 calculant une valeur absolue,

Le terme proportionnel (présent dans l'équation 1) est calculé grâce aux portes de calcul 134 et 1135.

La valeur initiale de régulation P_Meca0=|EM_Speed(t0).Torque_Final_ Request(t0-1)| représente la puissance mécanique effectivement fournie par la machine électrique à instant du début de la régulation.

Comme représenté à la figure 3, le signal Tq_MaxMot_CellOverV sortant du premier module (et représentant, comme vu précédemment, la valeur de couple récupératif maximum qui limite la requête de couple à la machine électrique de façon à asservir la tension maximale des cellules CellVoltMax à la valeur de consigne C_CellOverVolt_Thr) est obtenu selon la logique suivante :

$$Tq\_MaxMot\_CellOverV = \begin{cases} Torque\_Max\_EM & SI \quad Flag\_Regul\_CellOverV = 0 \\ Min\left[ Torque\_Max\_EM ; \dfrac{P\_Meca\_CellOverV}{\max(|EM\_Speed|, eps)} \right] & SI \quad Flag\_Regul\_CellOverV = 1 \end{cases}$$

Avec :

- Eps : une constante strictement positive et de faible valeur (on veut juste éviter la division par 0 lorsque EM_Speed=0).

Cette logique est obtenue, comme représenté a la figure 3, grâce à une porte logique 115 de détermination d'une valeur maximale, une porte de calcul 116, une porte logique 117 due détermination d'une valeur minimale et une porte logique 118.

Comme mentionné précédemment, la régulation en boucle fermée réalisée par le M. bloc est active uniquement quand Flag_Regul_CellOverV=1. On peut remarquer qu'à l'instant t0 où la régulation s'active (instant où Flag_Regul_CellOverV passe à la valeur 1), le signal Tq _MaxMot_CellOverV prend la valeur de la requête finale de couple Torque_Final_Request à l'instant précédent. En effet :

$$P\_Meca\_CellOverV(t0) = P\_Meca0 = |EM\_Speed(t0) \cdot Torque\_Final\_Request(t0-1)| \implies$$

$$\implies Tq\_MaxMot\_CellOverV(t0) = \frac{P\_Meca\_CellOverV(t0)}{|EM\_Speed(t0)|} = |Torque\_Final\_Request(t0-1)|$$

Il n'y a donc pas de discontinuité de la commande (la requête de couple récupératif) lors de l'activation de la régulation en boucle fermée.

Dans le cas où

- la régulation est active : Flag_Regul_CellOverV=1
  ET
- la requête finale de couple au moteur est celle issue de la régulation :

  Torque_Final_Request=Tq_Max Mot_CellOverV = Tq_Regulation

alors le troisième bloc réalise un régulateur discret de type PI (proportionnel-intégral) fonctionnant à la période d'échantillonnage Update_Time_MinMax_CellV. Plus précisément, le régulateur est synchronisé avec les instants de rafraîchissement du signal CellVoltMax (il réalise une opération chaque fois que le signal CellVoltMax est mis à jour).

A partir de l'équation 1, on peut trouver la fonction de transfert du régulateur. Soit s la variable de Laplace, la fonction de transfert R(s) du régulateur réalisé par le troisième bloc est donc :

Equation 1 :

$$R(s) = \frac{P\_Meca\_CellOverV}{Cell\_Regul\_Erreur} = -C\_CellOverV\_Ki \cdot \left[ \frac{1}{C\_CellOverV\_OmegaZ} + \frac{1}{s} \right] =$$

$$= -\frac{C\_CellOverV\_Ki}{s} \left( 1 + \frac{s}{C\_CellOverV\_OmegaZ} \right)$$

Il s'agit donc d'un régulateur de type PI ayant un gain statique qui est égal au gain intégral) C_CellOverV_KI et le zéro à la pulsation C_CellOverV_OmegaZ.

En effet, un régulateur PI est souvent écrit sous la forme $R_{pt}(s) = \dfrac{KI}{s} + Kp$.

L'équation précédente peut être réécrite sous la forme $R_{PI}(s) = R_{PI}(s) = \dfrac{KI}{s}\left(1 + \dfrac{s}{\omega_z}\right)$, , avec $\dfrac{KI}{Kp} = \omega_3$,

On considère que la requête de couple moteur Torque_Final_Request = Tq_Regulation est réalisée par le moteur avec une dynamique beaucoup plus rapide que celle de la régulation en boucle fermée. On peut faire alors l'hypothèse simplificatrice suivante :

Première hypothèse :

$$\text{Tq\_Regulation} = \text{Tq} \implies \overbrace{Tq \cdot EM\_Speed}^{Puissance\ Mécanique} = P\_Meca\_CellOverV$$

Avec : Tq le couple récupératif réellement réalisé par le moteur électrique.

On considère également que les cellules constituant la batterie sont toutes identiques (leur résistance interne est la même) et que le déséquilibre de tensions entre les différentes cellules est négligeable :

Deuxième hypothèse :

$$\begin{cases} V_{Cell}1 = V_{Cell}2 = ... = V_{Cell}n = \underset{i=1,...,n}{Max}(V_{Cell}i) \\ V_{soc}1 = V_{soc}2 = .... = V_{soc}n \end{cases}$$

Pour déterminer la fonction de transfert G(s) du système à contrôler, on part alors des équations suivantes :

$$\text{équation 3 :} \begin{cases} V = V_{Soc} - R \cdot I \\ Tq \cdot EM\_Speed = \mu \cdot V \cdot I \end{cases}$$

avec :

$$V_{soc} = \sum_{i=1,n} V_{soc}i$$

$$R = n \cdot R_{Cell}$$

$$V = \sum_{i=1,n} V_{Cell}i$$

$\mu$ : l'inverse du rendement de la machine électrique (et de l'onduleur dans le cas d'une machine à courant alternatif), en fonctionnement générateur (donc évoluant typiquement les valeurs 1/0.9 et 1/0.8).

Tq=Torque_Regulation avec la première hypothèse

En combinant les deux équations équation 3, on obtient :

$$I = \frac{V_{Soc} - V}{R} \quad \Rightarrow \quad -\frac{\mu}{R}V^2 + \frac{\mu \cdot V_{Soc}}{R} \cdot V - Tq \cdot EM\_Speed = 0$$

$$\Rightarrow \quad V = \frac{-\frac{\mu \cdot V_{Soc}}{R} \pm \sqrt{\left(\frac{\mu \cdot V_{Soc}}{R}\right)^2 - 4 \cdot \frac{\mu}{R} \cdot Tq \cdot EM\_Speed}}{-2 \cdot \frac{\mu}{R}} \Rightarrow$$

$$V = \frac{V_{Soc} \div \sqrt{V_{Soc}{}^2 - 4 \cdot \frac{R}{\mu} \cdot Tq \cdot EM\_Speed}}{2}$$

Le terme $\left(4 \cdot \frac{R}{\mu} \cdot Tq \cdot EM\_Speed\right)$ Speed est petit par rapport à $V_{Soc}{}^2$. On peut alors écrire (développement de Taylor d'ordre un):

$$V \approx \frac{V_{Soc}}{2} + \frac{1}{2}\left(V_{Soc} - \frac{4 \cdot \frac{R}{\mu} \cdot Tq \cdot EM\_Speed}{2 V_{Soc}}\right) = V_{Soc} - \frac{R}{V_{Soc} \cdot \mu} \cdot Tq \cdot EM\_Speed$$

Et donc avec les première et deuxième hypothèses :

$$V = \sum_{i=1,n} V_{Cell}i = n \cdot \underset{i=1,\ldots,n}{Max}(V_{Cell}i) \approx n \cdot V_{Soc}i - \frac{R}{V_{Soc} \cdot \mu} \cdot P\_Meca\_CellOverV$$

Comme vu précédemment, le calculateur de la batterie doit mesurer de façon séquentielle la tension de chaque cellule avant de pouvoir fournir une valeur pour le signal CellVoltMax. Cela implique que le signal CellVoltMax est retardé par rapport à la vraie tension $\underset{i=1,\ldots,n}{Max}(V_{Cell}i)$. Ce retard sera compris entre 0 et Update_Time_MinMax_CellV et plus précisément, il vaudra:

- 0 si la tension maximale est celle de la dernière cellule mesurée (CELL n sur la figure 6);
- Update_Time_MinMax_CellV si la tension maximale est celle de la première cellule mesurée (CELL 1 sur la figure 6)
- Une valeur comprise entre 0 et Update_Time_MinMax_CellV sinon.

Le cas le pire pour les performances et la stabilité de la régulation en boucle fermée est celui du retard maximum, c'est-à-dire le cas où le signal CellVoltMax est retardé de Update_Time_MinMax_CellV par rapport au signal $\underset{i=1,\ldots,n}{Max}(V_{Cell}i)$.

Dans ce pire cas, on peut alors écrire la fonction de transfert G(s) du système à contrôler :

Equation 4 :

$$G(s) = \frac{CellVoltMax}{P\_Meca\_CellOverV} = \frac{\left[\underset{i=1,\ldots,n}{Max}(V_{Cell})\right]e^{-Update\_Time\_MinMax\_CellV \, s}}{P\_Meca\_CellOverV} = \frac{R}{n \cdot V_{Soc} \cdot \mu} \cdot e^{-Update\_Time\_MinMax\_CellV \, s}$$

On peut alors schématiser la boucle de régulation comme à la figure 10.

A partir des équations 2 et 4, on peut écrire la fonction de transfert de la boucle ouverte corrigée :

$$F(s) = R(s) \cdot G(s) = \frac{C\_CellOverV\_Ki}{s}\left(1 + \frac{s}{C\_CellOverV\_OmegaZ}\right) \cdot \frac{R}{n \cdot V_{Soc} \cdot \mu} \cdot e^{-Update\_Time\_MinMax\_CellVs}$$

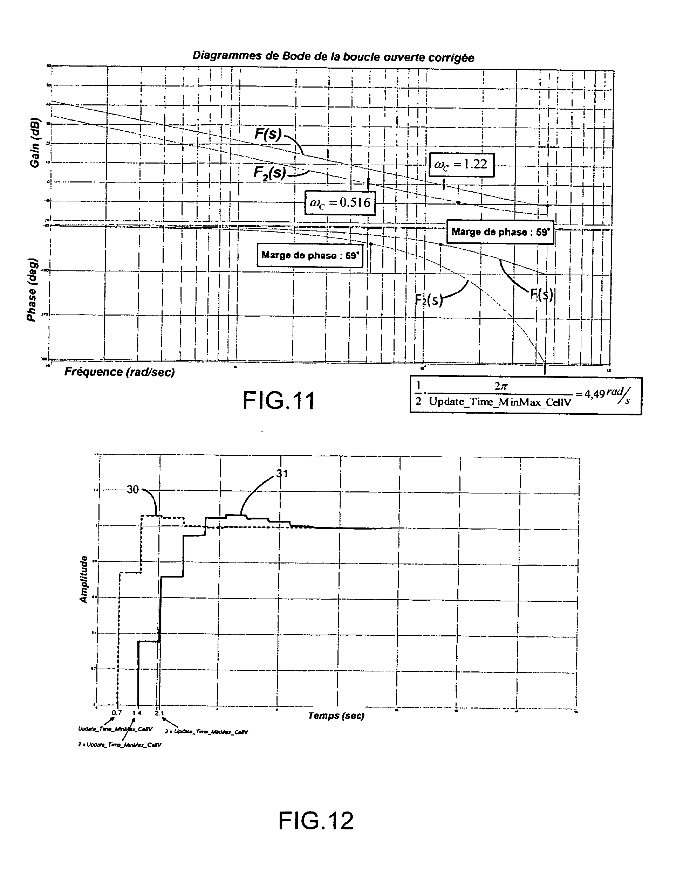

Les diagrammes de Bode du gain et de la phase de la boucle ouverte corrigée F(s) dans le cas où Update_Time_MinMax_CellV=0,7 sont représentés à la figure 11. De même, les diagrammes de Bode du gain et de la phase de la boucle ouverte corrigée $F_2(s)$, dans le cas où le régulateur utilisé n'est que purement intégral, sont représentés à la figure 11.

$$F_2(s) = R_2(s) \cdot G(s) = \frac{Ki}{s} \cdot \frac{R}{n \cdot V_{Soc} \cdot \mu} \cdot e^{-Update\_Time\_MinMax\_CellVs}$$

Le gain intégral Ki de ce deuxième régulateur a été choisi en sorte que la marge de phase de $F_2(s)$ soit équivalente à celle de F(s) (à 59°)

La courbe 30 de la figure 12 montre la réponse à un échelon unitaire de consigne du système corrigé avec le régulateur proportionnel intégral R(s) décrit plus haut. Sur cette même figure, la courbe 31 représente la réponse à un échelon de consigne du système corrigé avec un régulateur purement intégral $R_2(s)$.

On remarque que :

1. La bande passante de la régulation est indépendante de la vitesse de rotation de la machine électrique (EM_Speed) ;
2. La présence d'une action intégrale dans le régulateur permet d'assurer :

a) une erreur statique nulle en suivi de la consigne constante C_CellOverVolt_Thr (voir figure 12)
b) une erreur statique nulle vis-à-vis d'un échelon de variation du signal $V_{soc}i$ (Etant donné que la tension $V_{soc}i$ varie très lentement par rapport à la dynamique de la régulation, la caractéristique b) est suffisante pour assurer une erreur statique nulle vis-à-vis des variations de $V_{soc}i$.) 3. La présence d'un zéro dans le régulateur permet de compenser la réduction de phase due à l'échantillonnage et au retard $e^{-Update\_Time\_MinMax\_CellVs}$ (voir figure 11). Cela permet, par rapport à un régulateur purement intègral, de :

a) obtenir une marge de phase plus importante en conservant la même valeur de bande passante.
OU de façon équivalente
b) obtenir une bande passante de régulation plus importante (et donc une régulation plus rapide) en conservant la même valeur de marge de phase (voir figure 11 et du 12)

Etant donné que le but du zéro du régulateur est de compenserla réduction de phase due à l'échantillonnage et au retard $e^{-Update\_Time\_MinMax\_CellVs}$ la fréquence du zéro *C_CellOverV_OmegaZ* doit être choisie uniquement en fonction de la valeur du paramètre Update_Time_MinMax_CellV (un choix possible est par exemple de fixer *C_CellOverV_OmegaZ* à une valeur 3 décades inférieures à la fréquence $\left(\frac{1}{2} \cdot \frac{2\pi}{Update\_Time\_MinMax\_CellV}\right)$.

Une fois la valeur du paramètre *C_CellOverV_OmegaZ* fixée, le paramètre *C_CellOverV_Ki* permet de régler directement la bande passante de la régulation.

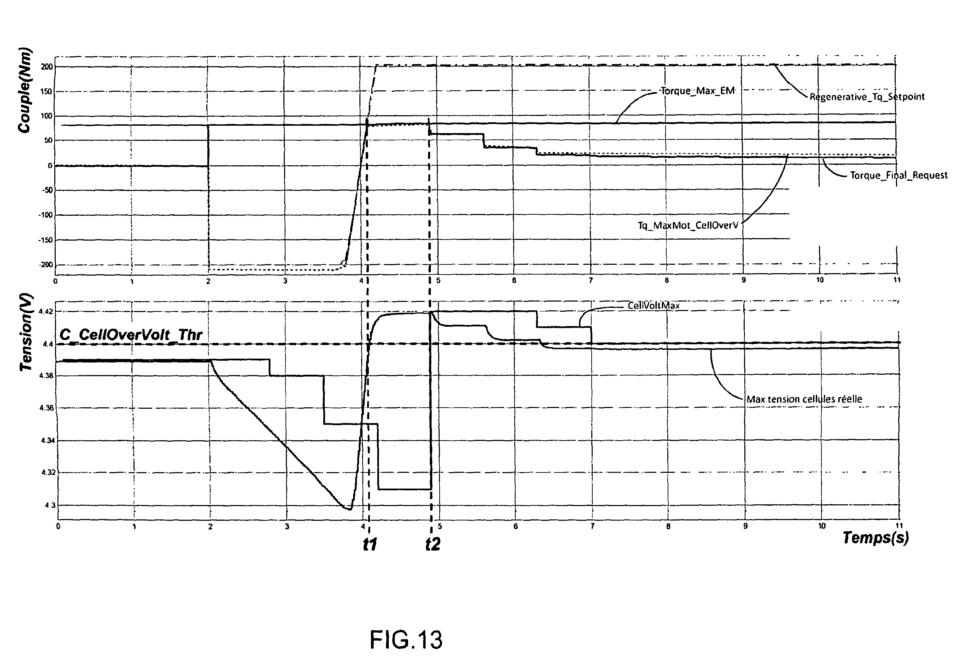

La figure 13 illustre un exemple de résultat obtenu.

La figure du haut montre l'allure des signaux Torque_Max_EM, Tq_MaxMot_CellOverV, Regenerative_Tq_Selpoint et Torque_Final_Request. Par convention, ces deux derniers signaux sont positifs si on demande à la machine électrique de réaliser un couple récupératif; ils sont négatifs si on lui demande un couple moteur.

La figure du bas montre l'allure de la tension maximale des cellules de la batterie $\underset{i=1,\dots,n}{Max}(V_{cell}i)$ ainsi que celle du signal CellVoltMax. Pour ce dernier signal, on a considéré un pas de quantification de 0.01 V et une période de rafraîchissement Update_Time_MinMax_CellV=0.7 sec.

Le seuil de surtension C_CellOverVolt_Thr vaut 4.4 V.

Sur ces figures, on peut remarque que :

- Pour t<t1, Torque_Final_Request = Regenerative_Tq_Setpoint
  La requête de couple issue du deuxième module n'est pas saturée par le signal de sortie Tq_MaxMot_CellOverV.
- Pour $t1 \leq t \leq t2$ Torque_Final_Request = Tq_MaxMot_CellOverV = Torque_Max_EM
  La requête de couple issue du deuxième module est saturée par le signal de sortie Tq_MaxMot_CellOverV. Ce dernier est donné par le signal Torque_Max_EM : la régulation en boucle fermée est inactive
- pour t>t2 Torque_Final_Request = Tq_MaxMot_CellOverV = Tq_Regulation

A l'instant t=t2, le signal CellVoltMax dépasse la valeur C_CellOverVolt_Thr. Cela veut dire que la tension maximale réelle des cellules $\underset{i=1,...,n}{Max}(V_{Cell i})$ a dépassé cette valeur un peu plus tôt. Comme lors de l'analyse fréquentielle précédente, dans cet exemple aussi, on s'est placé dans le pire cas, celui du retard maximum, c'est-à-dire le cas où le signal CellVoltMax est retardé de Update_Time_MinMax_CellV par rapport au signal $\underset{i=1,...,n}{Max}(V_{Cell i})$. A l'instant t=t2 la régulation en boucle fermée devient active et réduit le couple récupératif par rapport à la valeur du signal Torque_Max_EM. Cette réduction de couple implique une diminution de la tension CellVoltMax. On remarque qu'après un transitoire, cette dernière atteint la valeur de consigne C_CellOverVolt_Thr sans erreur statique (l'erreur statique du signal de tension physique $\underset{i=1,...,n}{Max}(V_{Cell i})$ est due à la quantification du signal CellVoltMax). La durée du transitoire dépend de la bande passante de la régulation. Cette dernière peut être directement modifiée avec le paramètre *C_CellOverV_Ki.*

## Revendications

1. Procédé de commande d'une machine électrique (2) comprenant un moteur électrique d'entraînement d'un véhicule automobile alimenté par une batterie (3) comprenant des cellules (31, 32, 311), ledit procédé comprenant une étape de limitation du couple récupératif pouvant être fourni par le moteur électrique, **caractérisé en ce que** l'étape de limitation du couple récupératif est activée dès que la tension électrique aux bornes d'une cellule de la batterie est supérieure à un premier seuil.

2. Procédé de commande selon la revendication 1, **caractérisé en ce que** l'étape de limitation du couple récupératif est désactivée dès que les tensions électriques aux bornes des cellules de la batterie sont toutes inférieures à un deuxième seuil.

3. Procédé de commande selon l'une quelconque des revendications précédentes, **caractérisé en ce que** l'étape de limitation est basée sur une régulation en boucle fermée.

4. Procédé de commande selon la revendication précédente, **caractérisé en ce que** dans la régulation en boucle fermée, la consigne est un seuil de tension des cellules de la batterie et la commande est le couple mécanique ou la puissance mécanique fourni par la machine électrique.

5. Procédé de commande selon la revendication 3 ou 4, **caractérisé en ce que** la régulation est de type discrète.

6. Procédé de commande selon l'une quelconque des revendications 3 à 5, **caractérisé en ce que** la régulation utilise un régulateur (113) de type proportionnel intégral.

7. Support d'enregistrement de données lisible par un calculateur sur lequel est enregistré un programme informatique comprenant des moyens de codes de programme informatique de mise en oeuvre des étapes du procédé de commande selon l'une quelconque des revendications précédentes.

8. Dispositif (10) de commande d'une machine électrique (2) comprenant un moteur électrique d'entraînement d'un véhicule automobile alimenté par une batterie (3), **caractérisé en ce qu'**il comprend des moyens matériels (11, 12, 13) et/ou logiciels de mise en oeuvre du procédé de commande selon l'une quelconque des revendications 1 à 6.

9. Dispositif de commande selon la revendication précédente, **caractérisé en ce que** les moyens matériels comprennent un régulateur (113) de type proportionnel intégral.

10. Système (1) d'entraînement d'un véhicule automobile comprenant un dispositif (10) de commande selon la revendication 8 ou 9, une machine électrique (2) comprenant un moteur électrique d'entraînement du véhicule automobile et une batterie (3).

11. Programme informatique comprenant un moyen de code de programme informatique adapté à la réalisation des étapes du procédé selon l'une quelconque des revendications 1 à 6, lorsque le programme tourne sur un ordinateur.


**Patentansprüche**

1. Verfahren zur Steuerung einer elektrischen Maschine (2), die einen elektrischen Antriebsmotor eines Kraftfahrzeugs aufweist, der durch eine Batterie (3) mit Strom versorgt wird, die Zellen (31, 32, 311) aufweist, wobei das Verfahren einen Schritt zum Begrenzen des generatorischen Moments aufweist, das durch den elektrischen Motor geliefert werden kann, **dadurch gekennzeichnet, dass** der Schritt zum Begrenzen des generatorischen Moments aktiviert wird, sobald die elektrische Spannung an den Klemmen einer Zelle der Batterie höher ist als ein erster Schwellenwert.

2. Verfahren zur Steuerung nach Anspruch 1, **dadurch gekennzeichnet, dass** der Schritt zum Begrenzen des generatorischen Moments deaktiviert wird, sobald die elektrischen Spannungen an den Klemmen der Zellen der Batterie alle niedriger sind als ein zweiter Schwellenwert.

3. Verfahren zur Steuerung nach einem der vorhergehenden Ansprüche, **dadurch gekennzeichnet, dass** der Begrenzungsschritt auf einem geschlossenen Regelkreis basiert.

4. Verfahren zur Steuerung nach dem vorhergehenden Anspruch, **dadurch gekennzeichnet, dass** in dem geschlossenen Regelkreis der Sollwert ein Spannungsschwellenwert der Zellen der Batterie ist und die Steuerung das mechanische Moment oder die mechanische Leistung ist, die durch die elektrische Maschine geliefert wird.

5. Verfahren zur Steuerung nach einem der Ansprüche 3 oder 4, **dadurch gekennzeichnet, dass** die Regelung vom diskreten Typ ist.

6. Verfahren nach einem der Ansprüche 3 bis 5, **dadurch gekennzeichnet, dass** die Regelung einen Regler (113) vom Typ Proportional-Integral-Regler verwendet.

7. Datenaufzeichnungsträger, der durch einen Rechner gelesen werden kann und auf dem ein Informatikprogramm gespeichert ist, das Informatikprogramm-Codemittel zur Durchführung der Schritte des Steuerungsverfahrens nach einem der vorhergehenden Ansprüche aufweist.

8. Vorrichtung (10) zur Steuerung einer elektrischen Maschine (2), die einen elektrischen Antriebsmotor eines Kraftfahrzeugs aufweist, der durch eine Batterie (3) mit Strom versorgt wird, **dadurch gekennzeichnet, dass** sie Hardware- (11, 12, 13) und/oder Softwaremittel zur Durchführung des Steuerungsverfahrens nach einem der Ansprüche 1 bis 6 aufweist.

9. Vorrichtung zur Steuerung nach dem vorhergehenden Anspruch, **dadurch gekennzeichnet, dass** die Hardwaremittel einen Regler (113) vom Proportional-Integraltyp aufweisen.

10. System (1) zum Antrieb eines Kraftfahrzeugs, das eine Vorrichtung (10) zur Steuerung nach Anspruch 8 oder 9, eine elektrische Maschine (2), die einen elektrischen Antriebsmotor des Kraftfahrzeugs aufweist, und eine Batterie (3) aufweist.

11. Informatikprogramm, das ein Informatikprogrammcodemittel aufweist, das an die Ausführung der Schritte des Verfahrens nach einem der Ansprüche 1 bis 6 angepasst ist, wenn das Programm auf einem Computer ausgeführt wird.

**Claims**

1.  Method for controlling an electrical machine (2) comprising an electric motor driving a motor vehicle powered by a battery (3) comprising cells (31, 32, 311), said method comprising a step of limiting the regenerative torque that can be supplied by the electric motor, **characterized in that** the step of limiting the regenerative torque is activated when the electrical voltage at the terminals of a cell of the battery is above a first threshold.

2.  Control method according to Claim 1, **characterized in that** the step of limiting the regenerative torque is deactivated when the electrical voltages at the terminals of the cells of the battery are all below a second threshold.

3.  Control method according to either one of the preceding claims, **characterized in that** the limiting step is based on a closed loop mode regulation.

4.  Control method according to the preceding claim, **characterized in that**, in the closed loop mode regulation, the setpoint is a voltage threshold of the cells of the battery and the control is the mechanical torque or the mechanical power supplied by the electrical machine.

5.  Control method according to Claim 3 or 4, **characterized in that** the regulation is of discrete type.

6.  Control method according to any one of Claims 3 to 5, **characterized in that** the regulation uses a regulator (113) of proportional integral type.

7.  Data storage medium that can be read by a computer on which is stored a computer program comprising computer program code means for implementing the steps of the control method according to any one of the preceding claims.

8.  Device (10) for controlling an electrical machine (2) comprising an electric motor driving a motor vehicle powered by a battery (3), **characterized in that** it comprises hardware means (11, 12, 13) and/or software means for implementing the control method according to any one of Claims 1 to 6.

9.  Control device according to the preceding claim, **characterized in that** the hardware means comprise a regulator (113) of proportional integral type.

10. System (1) for driving a motor vehicle comprising a control device (10) according to Claim 8 or 9, an electrical machine (2) comprising an electric motor driving the motor vehicle and a battery (3).

11. Computer program comprising a computer program code means suitable for performing the steps of the method according to any one of Claims 1 to 6, when the program runs on a computer.

FIG.1

FIG.2

FIG.3

**FIG.4**

**FIG.5**

**FIG.6**

FIG.7

FIG.8

FIG.9

FIG.10

Diagrammes de Bode de la boucle ouverte corrigée

FIG.11

$$\frac{1}{2} \cdot \frac{2\pi}{\text{Update\_Time\_MinMax\_CellV}} = 4,49 \, rad\!\!\big/_{\!s}$$

FIG.12

FIG.13

EP 2 426 008 B1

## RÉFÉRENCES CITÉES DANS LA DESCRIPTION

**Documents brevets cités dans la description**

- WO 2008093687 A
- EP 1084895 A
- JP 2001095106 B
- JP 9154202 B
- JP 2005218250 B
- US 2008197796 A